# EUROPEAN PATENT APPLICATION

(11) **EP 2 942 226 A1**
(43) Date of publication of application: **11.11.2015**
(21) Application number: 14167134.7
(22) Date of filing: 06.05.2014
(51) Int. Cl.: B60L 3/00, B64D 33/00, B64D 41/00, H01M 10/52

(54) **Aircraft battery exhaust system**

(71) Applicant: Airbus Operations GmbH, 21129 Hamburg (DE)
(72) Inventor: Dittmar, Jan, 21129 Hamburg (DE); Zahnow, Jens, 21129 Hamburg (DE); Jesske, Johannes, 21129 Hamburg (DE); Zamecnik, Juraj, 21129 Hamburg (DE)
(74) Representative: Schicker, Silvia

(57) **Abstract**

An aircraft battery exhaust system (10) comprises a fluid discharge opening (12) formed in an aircraft outer skin (14) and a fluid discharge line (16) having a first end connected to the fluid discharge opening (12) and a second end. A first fluid discharge branch line (18) has a first end connected to the second end of the fluid discharge line (16) and a second end connected to a first battery (20) in such a manner that a fluid leaking from the first battery (20) is directed into the first fluid discharge branch line (18). A second fluid discharge branch line (22) has a first end connected to the second end of the fluid discharge line (16) and a second end connected to a second battery (24) in such a manner that a fluid leaking from the second battery (24) is directed into the second fluid discharge branch line (22).

## Description

The invention relates to a exhaust system for venting batteries installed on board an aircraft and to a method of operating a exhaust system of this kind.

As modern passenger aircraft tend to be equipped with more and more electric and electronic devices, an increasing number of batteries, in particular Li-ion batteries, are installed on board the aircraft in order to provide for an appropriate power supply of the electric and electronic devices. The batteries may be used as primary power sources or as backup emergency power sources in case of a failure of the on-board power generators of the aircraft. Certain battery failure conditions such as, for example, a short circuit may lead to an evaporation of electrolytic solution contained in the battery and hence a sudden release of a high temperature and/or high pressure gas flow from the battery. Therefore, in order to protect the passengers and the crew members on board the aircraft as well as the aircraft equipment and the aircraft structure in the vicinity of a battery from being affected by hazardous substances which may be released in case of a battery failure, evacuation of the generated gas flow outside the aircraft fuselage in a controlled manner has to be ensured.

The invention is directed at the object to provide a cost and weight optimized aircraft battery exhaust system which, for example in case of a battery failure, allows a safe and reliable discharge of a fluid leaking from the battery to the aircraft environment. Furthermore, the invention is directed to the object to specify a method of operating a exhaust system of this kind.

This object is achieved by an aircraft battery exhaust system having the features of Claim 1 and by a method of operating an aircraft battery exhaust system having the features of Claim 9.

An aircraft battery exhaust system comprises a fluid discharge opening formed in an aircraft outer skin. Furthermore, the aircraft battery exhaust system comprises a fluid discharge line having a first end connected to the fluid discharge opening and a second end. In particular, the second end of the fluid discharge line is disposed opposite to the first end connected to the fluid discharge opening. A first fluid discharge branch line has a first end connected to the second end of the fluid discharge line and a second end connected to a first battery in such a manner that a fluid leaking from the battery is directed into the first fluid discharge branch line. Finally, a second fluid discharge branch line has a first end connected to the second end of the fluid discharge line and a second end connected to a second battery in such a manner that a fluid leaking from the second battery is directed into the second fluid discharge branch line.

In the aircraft battery exhaust system, the first fluid discharge branch line and the second fluid discharge branch line thus open into the fluid discharge line such that fluid leaking from the first battery can be discharged from the aircraft via the first discharge branch line and the fluid discharge line, whereas fluid leaking from the second battery can be discharged from the aircraft via the second fluid discharge branch line and the fluid discharge line. Hence, only a single fluid discharge opening has to be formed in the aircraft outer skin for discharging fluids leaking from the first and the second battery. In other words, in the aircraft battery exhaust system, the provision of separate fluid discharge openings associated with only one battery is avoided. As a result, the number of openings formed in the aircraft outer skin can be reduced allowing improvements of the aerodynamics and thus a reduction of the fuel consumption of the aircraft to be realized. Furthermore, the provision of a central fluid discharge line which is connected to the batteries via respective branch lines allows a reduction of the weight of the overall aircraft battery exhaust system as compared to a system wherein each battery is connected to a separate fluid discharge opening via a separate fluid discharge line. These weight savings may be considerable, in particular in case the fluid discharge line and the fluid discharge branch lines are made of chemically stable, corrosion resistant as well as high temperature and/or high pressure resistant materials such as, for example, stainless steel, aluminium alloys or titanium alloys.

The fluid leaking from the first battery, for example in the event of a failure of the first battery may be a liquid or a gas. For example, a mechanical failure of an electrolyte container of the first battery may cause a leakage of the battery's electrolyte from the battery in liquid form. It is, however, also conceivable that certain battery failure conditions such as, for example, a short circuit or an exposure to a high temperature may lead to an evaporation of the battery's electrolyte and thus a release of a high temperature and/or high pressure gas flow from the battery. The same applies to the fluid which in the event of a failure of the second battery may leak from the second battery, i.e. also the fluid leaking from the second battery may be a liquid or a gas. In any case, the aircraft battery exhaust system provides for a reliable and save discharge of these fluids from the aircraft. The aircraft battery exhaust system thus ensures that the passengers and the crew members on board the aircraft as well as well as the aircraft equipment and the aircraft structure in the vicinity of the first and the second battery are protected from being affected by potentially hazardous substances which may be released in the event of a failure of the first and/or the second battery.

The aircraft battery exhaust system may be suitable to vent only two batteries, i.e. to discharge fluids leaking from only two batteries. It is, however, also conceivable to modify the aircraft battery exhaust system in such a manner that more than two batteries can be vented. For example, the aircraft battery exhaust system may comprise further fluid discharge branch lines each having a first end connected to the second end of the fluid discharge line and a second end connected to a respective battery in such a manner that a fluid leaking from the battery is directed into the respective fluid discharge branch line and, via the fluid discharge line, can be discharged from the aircraft through the central discharge opening. The more batteries are connected to a central fluid discharge line, the more weight and cost savings can be realized.

In a preferred embodiment of the aircraft battery exhaust system, the second end of the first fluid discharge branch line is connected to a first battery housing accommodating the first battery. Alternatively or additionally thereto, the second end of the second fluid discharge branch line may be connected to a second battery housing accommodating the second battery. The first and/or the second battery housing may be made of stainless steel, an aluminium alloy or any other suitable material and serve(s) to protect the respective battery from undesired environmental influences at the installation space on board the aircraft. Furthermore, the housing serves to protect equipment installed in the vicinity of the battery from being affected by a battery failure, for example, the release of high temperature and/or high pressure gas due to the evaporation of the battery's electrolyte. When the fluid discharge branch lines of the aircraft battery exhaust system are connected to a respective battery housing, any fluids leaking from the battery are reliably directed into the fluid discharge branch line thus allowing a save removal of the fluid from the aircraft. Furthermore, by connecting the fluid discharge branch lines directly to respective battery housings, additional containers accommodating the battery housings can be dispensed with thus allowing further cost and weight savings to be realized.

In a preferred embodiment of the aircraft battery exhaust system, a separation device is provided which is adapted to establish a fluid-tight separation between the first fluid discharge branch line and the second fluid discharge branch line. The separation device may ensure that, for example in the event of a failure of the first battery, the fluid leaking from the first battery is discharged from the aircraft without affecting the second battery. Similarly, in the event of a failure of the second battery, the separation device may provide for a reliable protection of the first battery from a fluid leaking from the second battery.

An aircraft battery exhaust system equipped with a separation device is suitable for venting safety-relevant batteries, for example batteries which are used for supplying safety-relevant electric or electronic devices with power or batteries which serve as back-up emergency power sources in case of a failure of the on-board power generators of the aircraft for safety-relevant devices. Preferably, the separation device allows a mutual separation of the first fluid discharge branch line and the second fluid discharge branch line, i.e. preferably, the separation device is adapted to prevent fluid flowing through the first fluid discharge branch line from entering the second fluid discharge branch line, and to prevent fluid flowing through the second fluid discharge branch line from entering the first fluid discharge branch line

The separation device may comprise at least one non-return valve. For example, a non-return valve may be disposed in either the first or the second fluid discharge branch line which allows a fluid flow through the respective fluid discharge branch line in the direction of the fluid discharge line, but which prevents both, a back flow of fluid from the fluid discharge line into the fluid discharge branch line and a fluid flow from the fluid discharge branch line not equipped with a non-return valve into the fluid discharge branch line equipped with a non-return valve.

However, a single non-return valve disposed in the first fluid discharge branch line does not prevent fluid discharged via the first fluid discharge branch line from entering the second fluid discharge branch line and a single non-return valve disposed in the second fluid discharge branch line does not prevent fluid discharged via the second fluid discharge branch line from entering the first fluid discharge branch line. A single non-return valve disposed in either the first or the second fluid discharge branch line thus is only suitable for use in an aircraft battery exhaust system, wherein one of the batteries is less sensitive to fluid leaking from the other battery.

Preferably, the separation device therefore comprises a multiple non-return valve. The multiple non-return valve may be disposed at an intersection point of the fluid discharge line, the first fluid discharge branch line and the second fluid discharge branch line. In case the aircraft battery exhaust system comprises two fluid discharge branch lines opening into the fluid discharge line, the multiple non-return valve may be designed in the form of a double non-return valve which allows a fluid flow from the first fluid discharge branch line into the fluid discharge line and which also allows a fluid flow from the second fluid discharge branch line into the fluid discharge line.

The double non-return valve, however, prevents a back flow of fluid from the fluid discharge line into one of the fluid discharge branch lines as well as a fluid flow from the first fluid discharge branch line into the second fluid discharge branch line and a fluid flow from the second fluid discharge branch line into the first fluid discharge branch line. In case more than two fluid discharge branch lines are provided in the aircraft battery exhaust system which open into the central fluid discharge line, the design of the multiple non-return valve may be adapted as desired so as to allow a fluid flow from any of the fluid discharge branch lines into the fluid discharge line, but to prevent a back flow of fluid from the fluid discharge line in any one of the fluid discharge branch lines and to also prevent fluid communication between the fluid discharge branch lines.

Alternatively or additionally thereto, the separation device may comprise a plurality of non-return valves. Preferably, one non-return valve is disposed in each of the first and the second fluid discharge branch line. Like a multiple non-return valve, a plurality of non-return valves provide for a reliable mutual separation of the first and the second fluid discharge branch line. In case the aircraft battery exhaust system comprises more than two fluid discharge branch lines opening into the fluid discharge line, a non-return valve may be disposed in each of the fluid discharge branch lines.

In a particularly preferred embodiment of the aircraft battery exhaust system, the fluid discharge opening is sealed by means of a burst disc. The burst disc may be designed so as to burst when exposed to a predetermined pressure acting on the burst disc, for example, a pressure exerted onto the burst disc when a fluid leaking from the first and/or the second battery flows through the fluid discharge line in the direction of the fluid discharge opening. During normal operation of the batteries, the burst disc protects the batteries from atmospheric pressure fluctuations induced by the aircraft altitude mission profile. In the event of a failure of a battery, the burst disc, however, allows a safe and reliable discharge of battery fluid from the aircraft.

At least one of the first and the second battery may be a Li-ion battery. Li-ion batteries are particularly suitable to supply high-performance electric and electronic devices with power and the aircraft battery exhaust system, as explained in detail above, allows for a safe and reliable discharge of a fluid leaking from a Li-ion battery in the event of a failure of the battery to the aircraft environment.

In a method of operating an aircraft battery exhaust system comprising a fluid discharge opening formed in an aircraft outer skin and a fluid discharge line having a first end connected to the fluid discharge opening and a second end, in the event of a failure of a first battery, a fluid leaking from the first battery is directed into a first fluid discharge branch line having a first end connected to the second end of the fluid discharge line and a second end connected to the first battery. In the event of a failure of a second battery, a fluid leaking from the second battery is directed into a second fluid discharge branch line having a first end connected to the second end of a fluid discharge line and a second end connected to the second battery.

The fluid leaking from the first battery is directed into the first fluid discharge branch line from a first battery housing accommodating the first battery. Alternatively or additionally thereto, the fluid leaking from the second battery is directed into the second fluid discharge branch line from a second battery housing accommodating the second battery.

The first fluid discharge branch line and the second fluid discharge branch line may be separated from each other in a fluid-tight manner by means of a separation device.

The first fluid discharge branch line and the second fluid discharge branch line may be separated from each other in a fluid-tight manner by means of a separation device comprising at least one non-return valve.

In particular, the first fluid discharge branch line and the second fluid discharge branch line may be separated from each other in a fluid-tight manner by means of a separation device comprising a multiple non-return valve disposed at an intersection point of the fluid discharge line, the first fluid discharge branch line and the second fluid discharge branch line.

Alternatively or additionally thereto, the first fluid discharge branch line and the second fluid discharge branch line may be separated from each other in a fluid-tight manner by means of a separation device comprising a plurality of non-return valves. In particular, one non-return valve may be disposed in each of the first and the second fluid discharge branch line.

The fluid leaking from the first and/or the second battery and being directed to the fluid discharge line may cause bursting of a burst disc sealing the fluid discharge opening so as to allow the fluid leaking from the first and/or the second battery exiting the fluid discharge line via the fluid discharge opening.

Preferred embodiments of the invention will now be explained in more detail with reference to the appended schematic drawings, wherein
- Figure 1: shows a first embodiment of an aircraft battery exhaust system,
- Figure 2: shows a second embodiment of an aircraft battery exhaust system, and
- Figure 3: shows a third embodiment of an aircraft battery exhaust system.

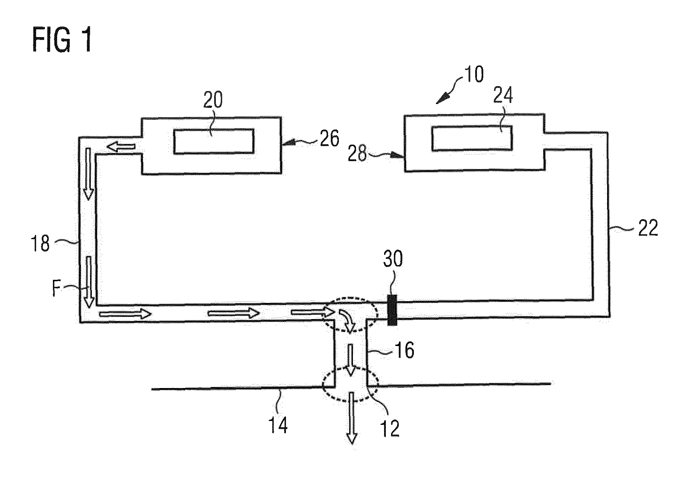

Figure 1 shows a first general form of embodiment of an aircraft battery exhaust system 10. The aircraft battery exhaust system 10 comprises a fluid discharge opening 12 which is formed in an aircraft outer skin 14. A first end of a fluid discharge line 16 is connected to the fluid discharge opening 12. The fluid discharge line 16 further comprises a second end disposed opposite to the first end.

The aircraft battery exhaust system 10 further comprises a first fluid discharge branch line 18. A first end of the first fluid discharge branch line 18 is connected to the second end of the fluid discharge line 16. A second end of the first fluid discharge branch line 18 which is disposed opposite to the first end is connected to a first battery 20 in such a manner that a fluid leaking from the first battery 20 is directed into the first fluid discharge branch line 18. Similarly, a second fluid discharge branch line 22 has a first end connected to the second end of the fluid discharge line 16 and a second end disposed opposite to the first end and connected to a second battery 24 in such a manner that a fluid leaking from the second battery 24 is directed into the second fluid discharge branch line 22.

In particular, the second end of the first fluid discharge branch line 18 is connected to a first battery housing 26 accommodating the first battery 20, whereas the second end of the second fluid discharge branch line 22 is connected to a second battery housing 28 accommodating the second battery 24. In the embodiments of an aircraft battery exhaust system 10 shown in the drawings, the first and the second battery 20, 24 are Li-ion batteries which are particularly suitable for supplying power to high-performance electric and electronic devices on board the aircraft.

Finally, the aircraft battery exhaust system 10 comprises a separation device 30. In the embodiment of an aircraft battery exhaust system 10 according to Figure 1, the separation device 30 is disposed in the second fluid discharge branch line 22. It would, however, also be possible to arrange the separation device 30 in the first fluid discharge branch line 18. In any case, the separation device 30 establishes a fluid-tight separation between the first fluid discharge branch line 18 and the second fluid discharge branch line 22. Thus, as shown in Figure 1, a fluid F leaking from the first battery 20 can be discharged from the first battery housing 26 via the first fluid discharge branch line 18 and the fluid discharge line 16 without entering the second fluid discharge branch line 22. As a result, the second battery 24 is reliably protected from the fluid leaking from the first battery 20.

The fluid leaking from the first battery 20 may be a liquid or a gas. In particular, the fluid leaking from the first battery 20 may be a high temperature and/or high pressure gas flow generated by the evaporation of battery electrolyte which may be caused, for example, by a short circuit or an exposure of the first battery 20 to an undue high temperature. The fluid leaking from the first battery 20 is discharged to the aircraft environment via the fluid discharge opening 12.

The separation device 30 is designed in the form of a non-return valve. Thus, although the separation device 30 prevents fluid leaking from the first battery 20 from entering the second fluid discharge branch line 22, the separation device 30 allows fluid leaking from the second battery 24 in the event of a failure of the second battery 24 to exit the second fluid discharge branch line 22 and to be discharged from the aircraft via the fluid discharge line 16 and the fluid discharge opening 12. In this case, however, for protection of the first battery 20 from the fluid leaking from the second battery 24 cannot be guaranteed. The first battery 20 therefore should be used to supply power to a lower priority and/or not safety relevant electric or electronic device only.

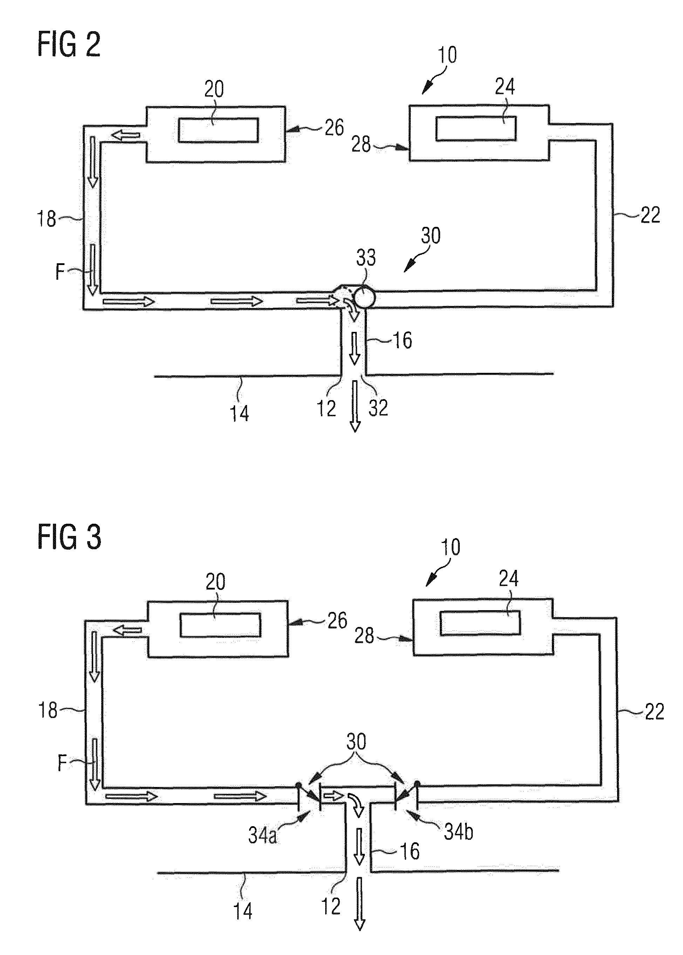

In the second embodiment of an aircraft battery exhaust system 10 shown in figure 2, the separation device 30 comprises a multiple non-return valve 33, i.e. a double non-return valve which is disposed at an intersection point of the fluid discharge line 16, the first fluid discharge branch line 18 and the second fluid discharge branch line 22. As shown in figure 2, fluid leaking from the first battery 20 reliably is prevented from entering the second fluid discharge branch line 22, but is discharged from the aircraft via the fluid discharge line 16 and the fluid discharge opening 12. In case of a failure of the second battery 24, the double non-return valve 33, in the position indicated in dotted lines in figure 2 allows the discharge of fluid leaking from the second battery 24 from the aircraft via the second fluid discharge branch line 22, the fluid discharged line 16 and the fluid discharge opening 12, but prevents the fluid leaking from the second battery 24 from entering the first fluid discharge branch line 18.

Furthermore, in the embodiment of an aircraft battery exhaust system 10 depicted in figure 2, the fluid discharge opening 12 is sealed by means of a burst disc 32. During normal operation of the batteries 20, 24, the burst disc 32 protects the batteries 20, 24 from atmospheric pressure fluctuations induced by the aircraft altitude mission profile. The burst disc 32 however, is designed so as to burst and to thus release the fluid discharge opening 12 in case a fluid leaking from either the first or the second battery 20, 24 flows through the fluid discharge line 16 and hence exerts a pressure onto the burst disc 32. Otherwise, the structure and the function of the aircraft battery exhaust system 10 according to figure 2 corresponds to the structure and function of the arrangement according to figure 1.

Figure 3 shows a third embodiment of an aircraft battery exhaust system 10 which differs from the arrangement according to figure 2 in that the separation device 30 now no longer comprises a double non-return valve, but instead comprises two non-return valves 34a, 34b. One non-return valve 34a, 34b is disposed in each of the first and the second fluid discharge branch line 18, 22. As shown in figure 3, in the event of a failure of the first battery 20, a fluid leaking from the first battery 20 exits the aircraft via the first fluid discharge branch line 18, the fluid discharge line 16 and the fluid discharge opening 12, wherein the non-return valve 34b disposed in the second fluid discharge branch line 22 prevents the fluid from entering the second fluid discharge branch line 22. The second battery 24 thus is reliably protected.

Similarly, in the event of a failure of the second battery 24, fluid leaking from the second battery 24 can be discharged from the aircraft via the second fluid discharge branch line 22, the fluid discharge line 16 and the fluid discharge opening 12, wherein the non-return valve 34a disposed in the first fluid discharge branch line 18 prevents the fluid from entering the first fluid discharge branch line 18 and thus provides for protection of the first battery 20. Moreover, the non- return valves 34a, 34b prevent a back flow of fluid from the fluid discharge line 16 into the first and the second fluid discharge branch line 18, 22. Otherwise the structure and the function of the aircraft battery exhaust system 10 correspond to the structure and the function of the arrangement according to figure 2.

While certain features of the aircraft battery exhaust system 10 have been described in relation to particular embodiments of the battery aircraft exhaust system 10, it is of course possible to combine these features as desired.

## Claims

1. An aircraft battery exhaust system (10) comprising:
- a fluid discharge opening (12) formed in an aircraft outer skin (14),
- a fluid discharge line (16) having a first end connected to the fluid discharge opening (12) and a second end,
- a first fluid discharge branch line (18) having a first end connected to the second end of the fluid discharge line (16) and a second end connected to a first battery (20) in such a manner that a fluid leaking from the first battery (20) is directed into the first fluid discharge branch line (18), and
- a second fluid discharge branch line (22) having a first end connected to the second end of the fluid discharge line (16) and a second end connected to a second battery (24) in such a manner that a fluid leaking from the second battery (24) is directed into the second fluid discharge branch line (22).

2. The aircraft battery exhaust system according to Claim 1,
wherein the second end of the first fluid discharge branch line (18) is connected to a first battery housing (26) accommodating the first battery (20) and/or wherein the second end of the second fluid discharge branch line (22) is connected to a second battery housing (28) accommodating the second battery (24).

3. The aircraft battery exhaust system according to Claim 1 or 2,
further comprising a separation device (30) which is adapted to establish a fluid-tight separation between the first fluid discharge branch line (18) and the second fluid discharge branch line (22).

4. The aircraft battery exhaust system according to Claim 3,
wherein the separation device (30) comprises at least one non-return valve (33; 34a, 34b).

5. The aircraft battery exhaust system according to Claim 4,
wherein the separation device (30) comprises a multiple non-return valve (33) disposed at an intersection point of the fluid discharge line (16), the first fluid discharge branch line (18) and the second fluid discharge branch line (22).

6. The aircraft battery exhaust system according to Claim 4 or 5,
wherein the separation device (30) comprises a plurality of non-return valves (34a, 34b), wherein one non-return valve (34a, 34b) is disposed in each of the first and the second fluid discharge branch line (22).

7. The aircraft battery exhaust system according to any one of Claims 1 to 6,
wherein the fluid discharge opening (12) is sealed by means of a burst disc (32).

8. The aircraft battery exhaust system according to any one of Claims 1 to 7,
wherein at least one of the first and the second battery (20, 24) is a Li-ion battery.

9. A method of operating an aircraft battery exhaust system (10) comprising a fluid discharge opening (12) formed in an aircraft outer skin (14) and a fluid discharge line (16) having a first end connected to the fluid discharge opening (12) and a second end, wherein the method comprises the steps of:
- in the event of a failure of a first battery (20), directing a fluid leaking from the first battery (20) into a first fluid discharge branch line (18) having a first end connected to the second end of the fluid discharge line (16) and a second end connected to the first battery (20), and
- in the event of a failure of a second battery (24), directing a fluid leaking from the second battery (24) into a second fluid discharge branch line (22) having a first end connected to the second end of the fluid discharge line (16) and a second end connected to the second battery (24).

10. The method according to Claim 9,
wherein the fluid leaking from a first battery (20) is directed into the first fluid discharge branch line (18) from a first battery housing (26) accommodating the first battery (20) and/or wherein the fluid leaking from the second battery (24) is directed into the second fluid discharge branch line (22) from a second battery housing (28) accommodating the second battery (24).

11. The method according to Claim 9 or 10,
wherein the first fluid discharge branch line (18) and the second fluid discharge branch line (22) are separated from each other in a fluid-tight manner by means of a separation device (30).

12. The method according to Claim 11,
wherein the first fluid discharge branch line (18) and the second fluid discharge branch line (22) are separated from each other in a fluid-tight manner by means of a separation device (30) comprising at least one non-return valve (33; 34a, 34b).

13. The method according to Claim 12,
wherein the first fluid discharge branch line (18) and the second fluid discharge branch line (22) are separated from each other in a fluid-tight manner by means of a separation device (30) comprising a multiple non-return valve (33) disposed at an intersection point of the fluid discharge line (16), the first fluid discharge branch line (18) and the second fluid discharge branch line (22).

14. The method according to Claim 12 or 13,
wherein the first fluid discharge branch line (18) and the second fluid discharge branch line (22) are separated from each other in a fluid-tight manner by means of a separation device (30) comprising a plurality of non-return valves (34a, 34b), wherein one non-return valve (34a, 34b) is disposed in each of the first and the second fluid discharge branch line (22).

15. The method according to any one of Claims 9 to 14,
wherein the fluid leaking from the first and/or the second battery (24) and being directed through the fluid discharge line (16) causes bursting of a burst disc (32) sealing the fluid discharge opening (12) so as to allow the fluid leaking from the first and/or the second battery (24) exiting the fluid discharge line (16) via the fluid discharge opening (12).
